# EUROPEAN PATENT APPLICATION

(11) **EP 4 667 770 A1**
(43) Date of publication of application: **24.12.2025**
(21) Application number: 23930436.3
(22) Date of filing: 29.03.2023
(51) Int. Cl.: F16D 48/00, F16D 48/06

(54) **CLUTCH CONTROL DEVICE**

(71) Applicant: HONDA MOTOR CO., LTD., Tokyo 105-8404 (JP)
(72) Inventor: ONO, Junya, Tokyo 107-8556 (JP); TSUZUKI, Ryohei, Tokyo 107-8556 (JP); RYUZAKI, Tatsuya, Tokyo 107-8556 (JP); KAIBE, Yuma, Tokyo 107-8556 (JP); ITO, Asuka, Tokyo 107-8556 (JP); YOSHIDA, Masahiro, Tokyo 107-8556 (JP)
(74) Representative: Kiwit, Benedikt
(86) International application number: PCT/JP2023/012850
(87) International publication number: WO 2024/201798

(57) **Abstract**

A clutch control device (40A) is provided with a clutch device (26), a clutch actuator (50), a clutch operating element (4b), and a control unit (40), wherein the control unit (40) has an automatic control mode (M1) for automatically operating the clutch device (26) by a driving of the clutch actuator (50), a manual control mode (M2) for manually operating the clutch device (26) by an operation input to the clutch operation element (4b), and a manual control intervention mode (M3) to be shifted when an operation to the clutch operating element (4b) is detected during the automatic control mode (M1), and returns to the automatic control mode (M1) when a state in which a predetermined return condition is satisfied continues for a predetermined return time (T) during the manual control intervention mode (M3).

## Description

### TECHNICAL FIELD

The present invention relates to a clutch control device.

### BACKGROUND ART

Conventionally, a clutch control device in which the connection/disconnection operation of a clutch device is automatically performed by electric control is known (see, for example, Patent Document 1).

For example, Patent Document 1 discloses a configuration in which a driver can select an automatic mode for automatically performing a clutch operation and a manual mode for manually operating a clutch by operating a mode changeover switch when performing a clutch lever operation.

However, it is troublesome for the driver to operate both the clutch lever and the mode changeover switch in order to switch the clutch control mode. In a gearbox capable of switching between the automatic mode and the manual mode, there is a case in which the driver operates the gearbox by misidentifying the clutch control mode at that time. For example, if the vehicle is stopped while the clutch control mode is in the manual mode, there is a concern in that the driver may mistakenly recognize that the vehicle is in the automatic mode and may operate the shift operation member in gear without operating the clutch lever.

### Citation List

### Patent Document

Patent Document 1: Japanese Unexamined Patent Application, First Publication No. 2016-114230

### SUMMARY OF INVENTION

### Technical Problem

An object of the present invention is to return appropriately to the automatic mode after the intervention of the manual mode in a clutch control device which is capable of intervening an automatic mode for automatically controlling a clutch to a manual mode for manually operating the clutch. The present invention is directed to improving operability in order to solve the above problem. This will further improve traffic safety and contribute to the development of a sustainable transport system. Solution to Problem

A clutch control device (40A) is provided with a clutch device (26) that is configured to disconnect and connect power transmission between a prime mover (13) and an output object (21) of a vehicle (1), a clutch actuator (50) that is configured to operate the clutch device (26), a clutch operating element (4b) that is configured to operate the clutch device (26) separately from the clutch actuator (50), and a control unit (40) that is configured to control the drive of the clutch actuator (50), wherein the control unit (40) is a clutch control device (40A) which has an automatic control mode (M1) for automatically operating the clutch device (26) by a driving of the clutch actuator (50) and a manual control mode (M2) for manually operating the clutch device (26) by an operation input to the clutch operating element (4b), the control unit (40) has a manual control intervention mode (M3) to be shifted when operation to the clutch operating element (4b) is detected during the automatic control mode (M1), and the control unit (40) performs an automatic mode return control that returns to the automatic control mode (M1) when a state in which a predetermined return condition is satisfied continues for a predetermined return time (T) during the manual control intervention mode (M3).

According to this configuration, when the state satisfying the predetermined return condition continues for the predetermined return time during the manual control intervention mode, the automatic return to the automatic control mode is performed, whereby it is possible to prevent the driver from misidentifying the control mode and performing the shift operation (particularly, performing the in-gear operation without the clutch operation in spite of the manual control intervention mode).

In the second aspect of the present invention, according to the above mentioned first aspect, the return time (T) is varied according to at least one of the vehicle speed of the vehicle (1) and the rotational speed of the prime mover (13).

According to this configuration, by varying the time for returning to the automatic control mode in accordance with at least one of the vehicle speed and the number of revolutions of the prime mover, mode switching can be performed in consideration of the operability of the driver after the control intervention mode, and the clutch control mode can be appropriately returned to the automatic control mode while suppressing the discomfort of the driver.

In a third aspect, according to the above mentioned second aspect, when at least one of the vehicle speed and the rotation speed is less than a first threshold (V1), the recovery time (T) is set longer than a case in which the at least one of the value of the vehicle speed and the rotational speed is equal to or greater than the first threshold (V1).

According to this configuration, when at least one of the vehicle speed and the rotational speed is in a low vehicle speed region, the return time is extended to delay the return to the automatic control mode, and thus it is possible to suppress the occurrence of a sense of discomfort due to the clutch control which is different from the driver's intention.

In a fourth aspect, according to the above mentioned third aspect, the clutch device (26) is a normally closed clutch for transmitting rotational power, and starts counting the return time (T) in a case in which the differential clutch rotation generated between the upstream side and the downstream side of the clutch device (26) is less than a predetermined differential rotation threshold (Ne1).

According to this configuration, when the differential clutch rotation is less than the threshold (when the clutch device is in the locked state), the return time is counted, and therefore the return to the automatic control mode can be achieved in a state where the possibility that the driver operates the clutch device is low and the influence on the vehicle body behavior is small.

In the fifth aspect, according to the above mentioned fourth aspect, when the possibility of the stop of the prime mover (13) is detected during the counting of the return time (T), the clutch control device returns to the automatic control mode (M1) immediately without waiting for the return time (T) to elapse.

According to this configuration, when it is determined that there is a possibility that the prime mover will stop in this state because at least one of the vehicle speed and the rotational speed is decreased and the like, by performing a control of immediately returning to the automatic control mode and disconnecting the clutch device and the like, it is possible to avoid the stop of the prime mover.

In the sixth aspect, according to the above mentioned fifth aspect, the possibility of the stop of the prime mover (13) is detected in a case in which at least one of the vehicle speed and the rotational speed becomes equal to or less than a predetermined threshold (Ne2) or in a case in which the rate of decrease in at least one of the vehicle speed and the rotational speed becomes equal to or greater than a predetermined rate of decrease threshold (Ne3).

According to this configuration, the possibility of a stop of the prime mover can be easily detected by detecting the values or the rate of decrease of the vehicle speed and the rotational speed, and the clutch control mode can be appropriately returned to the automatic control mode.

In a seventh aspect, according to the fifth aspect, the possibility of the stop of the prime mover (13) is detected in a case in which the vehicle speed is less than the idle vehicle speed and at least one of the vehicle speed and the rotational speed is decreased.

According to this configuration, by further detecting a decrease in at least one of the vehicle speed and the rotational speed below the idle vehicle speed, it is possible to reliably detect the possibility of stopping the prime mover, and to appropriately return the clutch control mode to the automatic control mode.

### Advantageous Effects of Invention

According to the clutch control device of the present invention, in a clutch control device which is capable of intervening an automatic mode for automatically controlling a clutch to a manual mode for manually operating the clutch, it is possible to return appropriately to the automatic mode after the intervention of the manual mode.

### BRIEF DESCRIPTION OF DRAWINGS

[FIG. 1] A right side view of a motorcycle according to an embodiment of the present invention.
[FIG. 2] A cross-sectional view of a gearbox and a change mechanism of the motorcycle.
[FIG. 3] A block diagram of the gear shift system of the motorcycle.
[FIG. 4] An explanatory view showing a transition of a clutch control mode of the motorcycle.
[FIG. 5] A cross-sectional view taken along the axial direction of the clutch actuator.
[FIG. 6] A perspective view of a release shaft for operating a clutch device.
[FIG. 7] A cross-sectional view taken along line VII-VII of FIG. 5.
[FIG. 8A] A cross-sectional view corresponding to FIG. 7, showing an action of the release shaft in the half clutch region, and shows the operation when the release shaft is driven by the clutch actuator.
[FIG. 8B] A cross-sectional view corresponding to FIG. 7, showing an action of the release shaft in the half clutch region, and shows the case during manual intervention.
[FIG. 9A] A cross-sectional view corresponding to FIG. 7, showing an action of the release shaft in the standby position, and shows when the release shaft is driven by the clutch actuator.
[FIG. 9B] A cross-sectional view corresponding to FIG. 7, showing an action of the release shaft in the standby position, and shows during the manual intervention.
[FIG. 10] An explanatory diagram showing a specific example of the transition of the clutch control mode.
[FIG. 11] A flowchart showing a process for performing an automatic mode return control.

### DESCRIPTION OF EMBODIMENTS

Hereinafter, an embodiment of the present invention will be described below with reference to the drawings.

Further, in the following description, the directions such as the front, the rear, the left, and the right are the same as the directions in a vehicle described below unless otherwise specified. In addition, in the drawings used in the following description, an arrow FR indicating the front of the vehicle, an arrow LH indicating the left of the vehicle, and an arrow UP indicating the upper side of the vehicle are shown at appropriate positions. The term "intermediate" used in this embodiment means not only the center between the two ends of the object but also the inner range between the two ends of the object.

### <Entire vehicle>

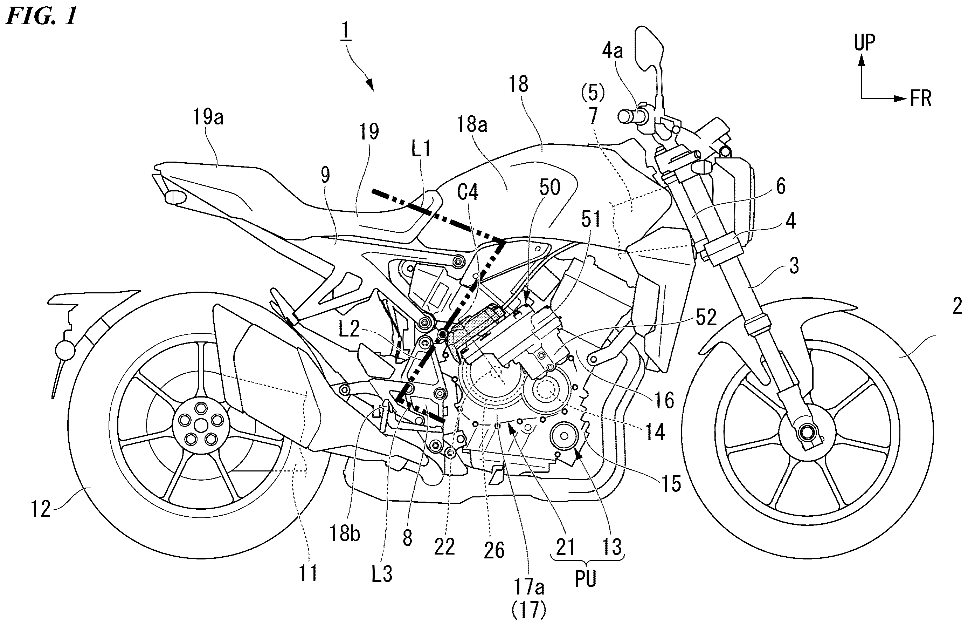

As shown in FIG. 1, the present embodiment is applied to a motorcycle 1 as an example of a saddle-ride type vehicle. The front wheel 2 of the motorcycle 1 is supported by the lower end portions of a pair of left and right front forks 3. The upper portions of the left and right front forks 3 are supported by a head pipe 6 at the front end of the vehicle body frame 5 via a steering stem 4. A bar-type steering handle 4a is attached onto the top bridge of the steering stem 4.

The vehicle body frame 5 includes the head pipe 6, main frames 7 extending downward and rearward from a center of the head pipe 6 in a vehicle width direction (leftward/rightward direction), pivot frames 8 provided below rear end portions of the main frames 7, and a seat frame 9 continuous with rear sides of the main frames 7 and the pivot frames 8. Front end portions of swing arms 11 are swingably axially supported by the pivot frames 8. A rear wheel 12 of the motorcycle 1 is supported by rear end portions of the swing arms 11.

A fuel tank 18 is supported above the left and right main frames 7. A front seat 19 and a rear seat 19a are supported above the seat frame 9 behind the fuel tank 18. Knee grip portions 18a recessed inward in a vehicle width direction are formed on both left and right sides of a rear portion of the fuel tank 18. The left and right knee grip portions 18a are formed to match the following areas. The areas are inner sides around left and right knees of a driver who sits on the front seat 19. Steps 18b are supported on both left and right sides below the front seat 19. The driver places feet in front of the ankles on the steps 18b.

A power unit PU including a prime mover of the motorcycle 1 is suspended below the main frames 7. The power unit PU integrally has an engine (internal combustion engine, prime mover) 13 located in the front thereof, and a gearbox (output object) 21 located in the rear thereof. The engine 13 is, for example, a multi-cylinder engine in which a rotary shaft of a crankshaft 14 is provided in a leftward/rightward direction (vehicle width direction).

The engine 13 has a cylinder 16 standing above a front portion of a crank case 15. A rear portion of the crank case 15 is a gearbox case 17 configured to accommodate the gearbox 21. A right cover 17a crossing a right side portion of the gearbox case 17 is attached to a right side portion of the crank case 15. The right cover 17a is a clutch cover configured to cover a clutch device 26. The power unit PU is linked to the rear wheel 12 via, for example, a chain type transmission mechanism (not shown).

### <Gearbox>

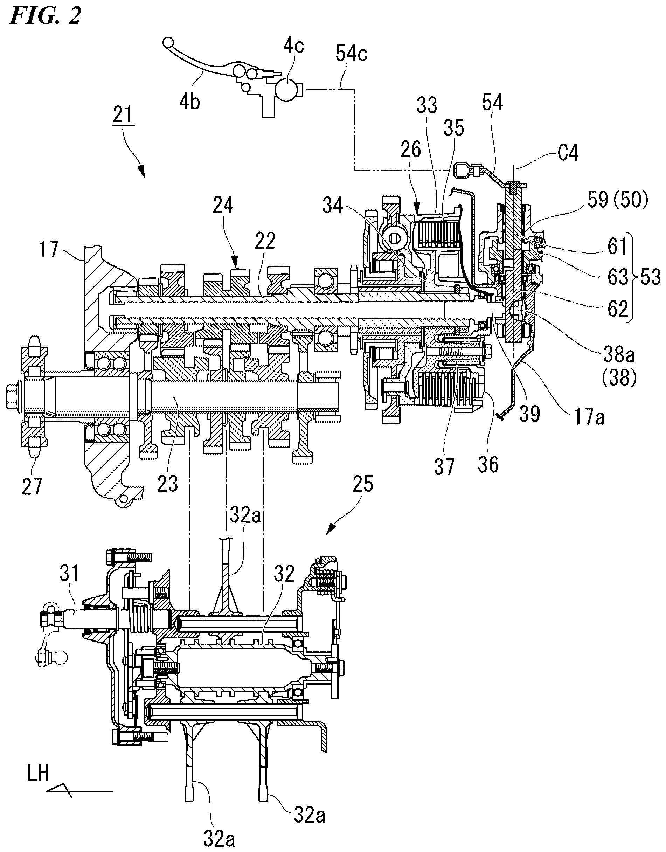

Referring also to FIG. 2, the gearbox 21 is a stepped transmission. The gearbox 21 has a main shaft 22 and a counter shaft 23, and a shifting gear group 24 that bridges between both the shafts 22 and 23. The counter shaft 23 constitutes an output shaft of the gearbox 21 and the power unit PU. A left end portion of the counter shaft 23 protrudes leftward from a rear portion of the gearbox case 17 and is connected to the rear wheel 12 via the chain type transmission mechanism.

The main shaft 22 and the counter shaft 23 of the gearbox 21 are disposed behind the crankshaft 14. The clutch device 26 is disposed coaxially with a right end portion of the main shaft 22. The clutch device 26 connects and disconnects power transmission between the crankshaft 14 of the engine 13 and the main shaft 22 of the gearbox 21. The clutch device 26 performs the connection and disconnection using at least one of an operation of a clutch operating element (for example, a clutch lever 4b) by an occupant or actuation of a clutch actuator 50, which will be described below.

The clutch device 26 is, for example, a wet type multi-plate clutch, a so-called normally closed clutch. Rotary power of the crankshaft 14 is transmitted to the main shaft 22 via the clutch device 26, and transmitted to the counter shaft 23 from the main shaft 22 via an arbitrary gear pair of the shifting gear group 24. A drive sprocket 27 of the chain type transmission mechanism is attached to a left end portion of the counter shaft 23 protruding leftward from a rear portion of the crank case 15.

A change mechanism 25 configured to switch a gear pair of the shifting gear group 24 is accommodated in the gearbox case 17 in the vicinity of the gearbox 21. The change mechanism 25 has a hollow cylindrical shift drum 32 parallel to both the shafts 22 and 23. The change mechanism 25 operates a plurality of shift forks 32a according to rotation of the shift drum 32. This operation is done according to a pattern of a lead groove formed in an outer circumference of the shift drum 32. According to this operation, the change mechanism 25 switches the gear pairs of the shifting gear group 24 used for power transmission between both the shafts 22 and 23.

Here, in the motorcycle 1, only a gear shifting operation (a foot operation of a shift pedal (not shown)) of the gearbox 21 is performed by a driver, and a connecting/disconnecting operation of the clutch device 26 is automatically performed by electric control according to the operation of the shift pedal. That is, the motorcycle 1 employs a so-called semi-automatic gear shift system (automatic clutch type gear shift system).

### <Gear shift system>

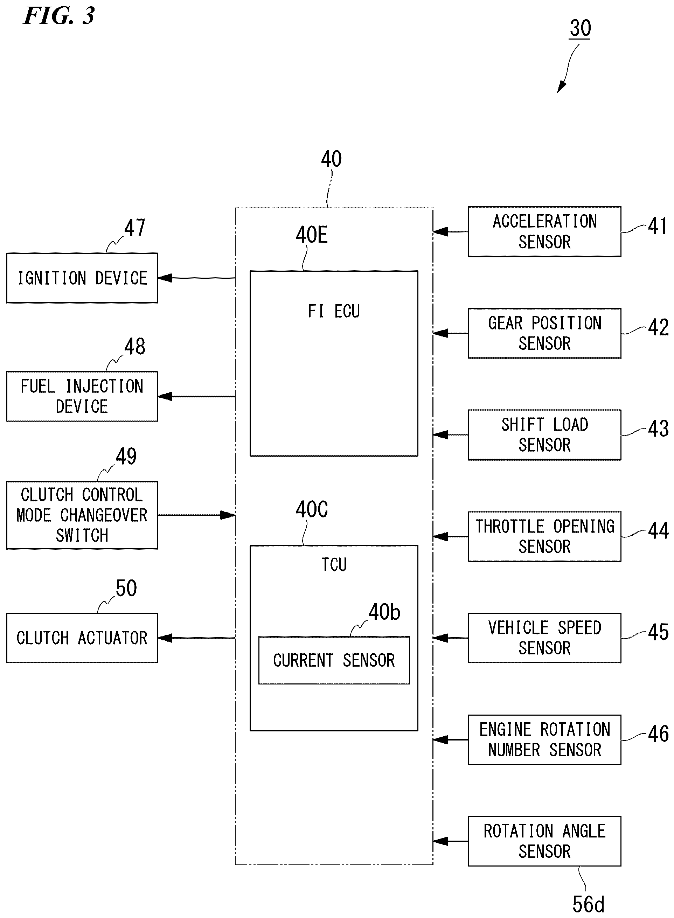

As shown in FIG. 3, a gear shift system 30 includes the clutch actuator 50, a control unit 40, various sensors 41 to 46, and various devices 47, 48 and 50.

The control unit 40 controls operations of the ignition device 47 and the fuel injection device 48, and controls an operation of the clutch actuator 50. This control is performed on the basis of detection information from the acceleration sensor 41, the gear position sensor 42, and the shift load sensor 43 (for example, a torque sensor), various types of vehicle state detection information from the throttle opening sensor 44, the vehicle speed sensor 45 and the engine rotation number sensor 46, and the like.

The acceleration sensor 41 detects a behavior of the vehicle body. The gear position sensor 42 detects a gear shifting stage from a rotation angle of the shift drum 32. The shift load sensor 43 detects an operation torque input to a shift spindle 31 (see FIG. 2) of the change mechanism 25. The throttle opening sensor 44 detects a throttle opening. The vehicle speed sensor 45 detects a vehicle speed. The engine rotation number sensor 46 detects an engine rotation number.

The control unit 40 includes a clutch control unit 40C and an engine control unit 40E which are independent of each other. The clutch control section 40C mainly controls the driving of the clutch actuator 50. The engine control unit 40E mainly controls the driving of the engine 13. The clutch control unit 40C and the engine control unit 40E are configured as, for example, ECU (Electronic Control Unit) that are separate from each other. The clutch control unit 40C and the engine control unit 40E may be integrated in the ECU as long as they perform independent control.

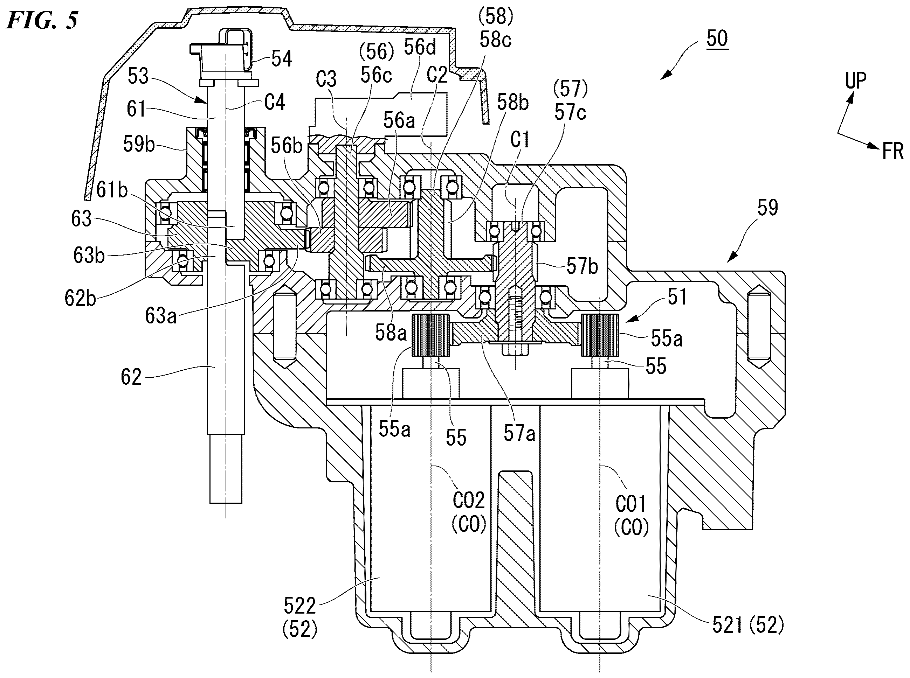

Referring also to FIG. 2 and FIG. 5, the clutch actuator 50 controls a working torque applied to a release shaft 53 in order to connect and disconnect the clutch device 26. The clutch actuator 50 includes an electric motor 52 (electric motor, hereinafter, simply referred to as the motor 52) as a driving source, and a speed reducing mechanism (reduction gear mechanism, transmission mechanism) 51 configured to transmit a driving force of the motor 52 to the release shaft 53. The speed reducing mechanism 51 includes a first reduction shaft 57, a second reduction shaft 58 and a third reduction shaft 56. For example, the third reduction shaft 56 is provided with a rotation angle sensor (rotation motion sensor) 56d for detecting, for example, a rotation angle of the third reduction shaft 56.

Referring to FIG. 3, the clutch controller 40C calculates the following current value on the basis of the previously set calculation program. The current value is a value of current supplied to the motor 52 in order to connect and disconnect the clutch device 26. The current supplied to the motor 52 is obtained from correlation with the torque output to the motor 52. The target torque of the motor 52 is proportional to a working torque (a driven clutch lever torque, which will be described later) given to the release shaft 53. The value of the current supplied to the motor 52 is detected by a current sensor 40b included in the clutch controller 40C. The operation of the clutch actuator 50 is controlled according to a change of the detected value. The clutch actuator 50 will be described below in detail.

### <Clutch device>

As shown in FIG. 2, the clutch device 26 of the embodiment is a multi-plate clutch obtained by stacking a plurality of clutch plates 35 in an axial direction, and a wet type clutch disposed in an oil chamber in the right cover 17a. The clutch device 26 includes an outer clutch 33, a center clutch 34, and the plurality of clutch plates 35.

The outer clutch 33 is driven by normally transmitting rotary power from the crankshaft 14. The center clutch 34 is disposed in the outer clutch 33 and supported by the main shaft 22 integrally rotatably. The plurality of clutch plates 35 are stacked between the outer clutch 33 and the center clutch 34 and frictionally engage them with each other.

A pressure plate 36 having substantially the same diameter as the clutch plates 35 is disposed on a right side of the stacked the clutch plates 35 (an outer side in the vehicle width direction). The pressure plate 36 receives an elastic load of a clutch spring 37 to be biased leftward, and pressure-welds (frictionally engages) the stacked clutch plates 35 with each other. Accordingly, the clutch device 26 is in a connected state in which power transmission is possible. The clutch device 26 is a normally closed clutch that becomes a connected state at normal times when there is no input from the outside.

Release of the pressure welding (frictional engagement) is achieved by an operation of a release mechanism 38 inside the right cover 17a. Actuation of the release mechanism 38 is achieved by at least one of an operation of a clutch lever 4b by an occupant and application of a torque by the clutch actuator 50.

### <Release mechanism>

As shown in FIG. 2, the release mechanism 38 includes a lifter shaft 39, and the release shaft 53.

The lifter shaft 39 is reciprocally held in a right side portion of the main shaft 22 in the axial direction. The release shaft 53 is disposed such that the lifter shaft 39 is perpendicular to the axial direction, and is held on an outer side portion of the right cover 17a to be rotatable around the axis.

Line C4 in the drawings indicates a center axis of the release shaft 53 extending in an upward/downward direction. The release shaft 53 is inclined rearward in the axial direction to be located rearward as it goes upward in a vertical direction when seen in the axial direction of the main shaft 22 (when seen in a side view of the vehicle) (see FIG. 1). The upper portion of the release shaft 53 protrudes outward from the right cover 17a, and a driven clutch lever 54 is integrally rotatably attached to an upper portion of the release shaft 53. The driven clutch lever 54 is connected to the clutch lever 4b via an operation cable 54c.

An eccentric cam portion 38a is provided on a lower portion of the release shaft 53 located inside the right cover 17a. The eccentric cam portion 38a is engaged with a right end portion of the lifter shaft 39. The release shaft 53 is pivoted around the axial center to move the lifter shaft 39 rightward using the action of the eccentric cam portion 38a. The lifter shaft 39 is configured reciprocally integrally with the pressure plate 36 of the clutch device 26. Accordingly, when the lifter shaft 39 is moved rightward, the pressure plate 36 is moved rightward (lifted) against the biasing force of the clutch spring 37. Accordingly, frictional engagement between the stacked clutch plates 35 is released. Accordingly, the normally closed clutch device 26 becomes a disconnected state in which power transmission is impossible.

Further, the release mechanism 38 is not limited to the eccentric cam mechanism and may include a rack and pinion, a feed screw, or the like. The mechanism configured to connect the clutch lever 4b and the driven clutch lever 54 is not limited to the operation cable 54c and may include a rod, a link, or the like. Further, a configuration may be provided in which an oil passage is provided between the clutch lever 4b and the release shaft 53, and the oil pressure generated by the master cylinder on the clutch lever 4b side is transmitted to the slave cylinder on the release shaft 53 side, so that the release shaft 53 is rotated by the operation of the slave cylinder.

### <Clutch control mode>

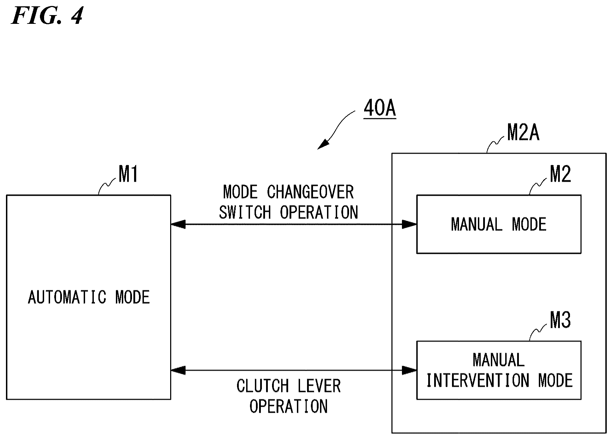

As shown in FIG. 4, a clutch control device 40A of the embodiment has three types of clutch control modes. The clutch control modes have an automatic mode M1 of performing automatic control, a manual mode M2 of performing a manual operation, and a manual intervention mode M3 of performing a temporary manual operation. The clutch control mode is appropriately transitioned between the three types of modes according to operations of a clutch control mode changeover switch 49 (see FIG. 3) and a clutch lever 4b. Further, an object including the manual mode M2 and the manual intervention mode M3 is referred to as a manual system M2A.

The automatic mode M1 is a mode of calculating a clutch capacity appropriate for a traveling state and controlling the clutch device 26 according to automatic departure/gear shifting control. The manual mode M2 is a mode of calculating a clutch capacity and controlling the clutch device 26 according to a clutch operation instruction by an occupant. The manual intervention mode M3 is a mode of receiving a clutch operation instruction from an occupant during the automatic mode M1, calculating a clutch capacity from the clutch operation instruction and controlling the clutch device 26, which is a temporary manual operation mode. Further, during the manual intervention mode M3, for example, when a state in which an occupant stops the operation of the clutch lever 4b (a fully released state) is continued for a prescribed time, it may be set to return to the automatic mode M1.

For example, the clutch control device 40A starts control from the clutch on state (connected state) in the automatic mode M1 when the system starts. In addition, the clutch control device 40A is set to return to the clutch on in the automatic mode M1 when the engine 13 stops (when the system is off). In the normally closed clutch device 26, when the clutch is on, there is no power supply to the motor 52 of the clutch actuator 50. Meanwhile, in the clutch off state (disconnect state) of the clutch device 26, power supply to the motor 52 is maintained.

The automatic mode M1 is based on automatic clutch control. The automatic mode M1 allows the motorcycle 1 to travel without lever operation. In the automatic mode M1, the clutch capacity is controlled based on the throttle opening, the engine rotation number, the vehicle speed, the shift sensor output, and the like. Accordingly, it is possible to start the motorcycle 1 only with throttle operation without engine stall (or engine stop). In addition, the motorcycle 1 can be shifted only by a shift operation. In addition, in the automatic mode M1, when the occupant grips the clutch lever 4b, it switches to the manual intervention mode M3. Accordingly, the clutch device 26 can be arbitrarily disconnected.

Meanwhile, in the manual mode M2, by the lever operation by the occupant, it is possible to control the clutch capacity (that is, to enable connection/disconnection of the clutch device 26). The automatic mode M1 and the manual mode M2 can be switched to each other. This switching is performed, for example, by operating the clutch control mode changeover switch 49 (see FIG. 3) while the motorcycle 1 is stopped and the gearbox 21 is in neutral. Further, the clutch control device 40A may include an indicator that indicates a manual state when transitioning to the manual system M2A (the manual mode M2 or the manual intervention mode M3).

The manual mode M2 is based on manual clutch control. The manual mode M2 can control the clutch capacity according to the operating angle of the clutch lever 4b (and thus the operating angle of the driven clutch lever 54). Accordingly, it is possible to control the connection/disconnection of the clutch device 26 according to the intention of the occupant.

For example, a clutch switch 4c is provided in a lever holder for holding the clutch lever 4b, and the clutch switch 4c is turned on when the clutch lever 4b is in gripped operation (when the clutch is disconnected) and is turned off when the clutch lever 4b is released as non-operation (when the clutch is connected). By turning on and off the clutch switch 4c, the control unit 40 can detect whether or not the driver has operated the clutch.

In the automatic mode M1, the connection/disconnection of the clutch device 26 is automatically performed by the clutch actuator 50. Here, by performing the manual clutch operation on the clutch lever 4b, it is possible to cause the automatic control of the clutch device 26 to temporarily intervene the manual operation (the manual intervention mode M3).

### <Manual clutch operation>

In the motorcycle 1 shown in FIG. 1, a clutch lever 4b as a clutch manual operator is attached to a base end side of a left grip of the steering handle 4a (an inner side in the vehicle width direction).

Referring also to FIG. 2, the clutch lever 4b is connected to the driven clutch lever 54 attached to the release shaft 53 of the clutch device 26 via an operation cable 54c. The driven clutch lever 54 is integrally rotatably attached to the upper end portion of the release shaft 53 protruding from the upper portion of the right cover 17a.

In addition, for example, the clutch control mode changeover switch 49 is provided on a handle switch (not shown) attached to the steering handle 4a. Accordingly, it is possible for the occupant to easily switch the clutch control mode during normal operation.

### <Clutch actuator>

As shown in FIG. 1, the clutch actuator 50 is attached to an upper portion of the right cover 17a of the crank case 15 on the right side.

Referring also to FIG. 5, the clutch actuator 50 includes the motor 52, and the speed reducing mechanism 51.

The motor 52 is, for example, a DC motor, and is disposed such that, for example, the release shaft 53 is parallel to the axial direction. The motor 52 is disposed such that a driving shaft 55 protrudes upward. The speed reducing mechanism 51 transmits a driving force of the motor 52 to the release shaft 53. Hereinafter, the axial direction common to the motor 52 and the release shaft 53 is referred to as an "actuator axial direction".

In the embodiment, a plurality of (two) motors 52 are provided in a single clutch actuator 50. Hereinafter, the motor 52 located in front of the clutch actuator 50 of the vehicle is referred to as a first motor 521, and the motor 52 located behind the first motor 521 of the vehicle and on an inner side in the vehicle width direction is referred to as a second motor 522. Lines C01 and C02 in the drawings indicate center axes (driving axes) of the motors 521 and 522, respectively. For convenience of description, both the motors 521 and 522 may be collectively referred to as the motor 52. In addition, both the axes C01 and C02 may be collectively referred to as an axis C0.

The speed reducing mechanism 51 reduces rotary power output from the motor 52 and transmits it to the release shaft 53. The speed reducing mechanism 51 includes, for example, a gear train in which the release shaft 53 is parallel to the axial direction. The speed reducing mechanism 51 includes driving gears 55a, a first reduction gear 57a, a first small diameter gear 57b, a second reduction gear 58a, a second small diameter gear 58b, a third reduction gear 56a, a third small diameter gear 56b, a driven gear 63a, and a gear case (mechanism case) 59.

The driving gears 55a is provided integrally with the driving shaft 55 of each of the motors 521 and 522. The first reduction gear 57a is meshed with each of the driving gears 55a. The first small diameter gear 57b is provided coaxially with the first reduction gear 57a. The second reduction gear 58a is meshed with first small diameter gear 57b. The second small diameter gear 58b is provided coaxially with the second reduction gear 58a. The third reduction gear 56a is meshed with second small diameter gear 58b. The third small diameter gear 56b is provided coaxially with the third reduction gear 56a. The driven gear 63a is meshed with the second small diameter gear 58b. The gear case 59 accommodates the gears.

The first reduction gear 57a and the first small diameter gear 57b are integrally rotatably supported by a first support shaft 57c. The first reduction gear 57a, the first small diameter gear 57b and the first support shaft 57c constitute the first reduction shaft 57. The second reduction gear 58a and the second small diameter gear 58b are integrally rotatably supported by a second support shaft 58c. The second reduction gear 58a, the second small diameter gear 58b and the second support shaft 58c constitute the second reduction shaft 58.

The third reduction gear 56a and the third small-diameter gear 56b are supported by a third support shaft 56c so as to be rotatable integrally with the third support shaft 56c. The third reduction gear 56a, the third small-diameter gear 56b, and the third support shaft 56c constitute a third reduction shaft 56. The third reduction gear 56a is a fan-shaped gear having a center at the third support shaft 56c. In the figure, a line C1 indicates the center axis of the first reduction shaft 57, a line C2 indicates the center axis of the second reduction shaft 58, and a line C3 indicates the center axis of the third reduction shaft 56.

The driven gear 63a is integrally rotatably provided on the release shaft 53. The driven gear 63a is a fan-shaped gear about the release shaft 53.

A gear of the speed reducing mechanism 51 on a downstream side has a small rotation angle. For example, the third reduction gear 56a and the driven gear 63a can be formed as fan-shaped gears with a small rotation angle.

As a result, the speed reducing mechanism 51 and the clutch actuator 50 can be reduced in size. That is, even when a large-diameter reduction gear is provided in order to increase the reduction ratio, the following effects can be obtained by cutting out portions other than the meshing range of the reduction gear to make it fan-shaped. That is, in particular, it is possible to suppress the speed reducing mechanism 51 from overhanging to the outer side in the vehicle width direction, and it is possible to reduce the weight of the speed reducing mechanism 51.

With such a configuration, the motor 52 and the release shaft 53 can always be interlocked via the speed reducing mechanism 51. Accordingly, a system is configured in which the clutch actuator 50 directly connects or disconnects the clutch device 26.

A rotation angle sensor 56d is provided on the upper surface of the gear case 59. The rotation angle sensor 56d is disposed outside the gear case 59, is connected to one end of the third reduction shaft 56 protruding outside the case, and detects the rotation angle of the third reduction shaft 56. By detecting the rotational angle of the third reduction shaft 56 close to the release shaft 53, the detection accuracy of the rotational angle of the release shaft 53 and thus the clutch capacity is enhanced.

The driving force of the motor 52 is reduced and transmitted to the release shaft 53 as follows. That is, the driving force of the motor 52 is reduced between the driving gears 55a and the first reduction gear 57a, reduced between the first small diameter gear 57b and the second reduction gear 58a, reduced between the second small diameter gear 58b and the third reduction gear 56a, and further, reduced between the third small diameter gear 56b and the driven gear 63a.

### <Disposition of clutch actuator>

As shown in FIG. 1, the clutch actuator 50 is disposed vertically below the knee grip portions 18a on the right side of the fuel tank 18 when seen in a side view of the vehicle. Line L1 in the drawings designates a femoral region of a driver's leg, Line L2 designates a lower leg from the knee, and Line L3 designates a foot from the ankle. As for the leg of the driver, when seen in a side view of the vehicle, the lower leg L2 extends obliquely rearward and downward from the knee grip portion 18a and the foot L3 is placed on the step 18b.

The clutch actuator 50 overhangs outward from the knee grip portions 18a in the vehicle width direction. The clutch actuator 50 is disposed so as to avoid the lower leg L2 of the driver's leg forward when seen in a side view of the vehicle. Accordingly, interference of the clutch actuator 50 with respect to the disposition space of the driver's leg is suppressed. The clutch actuator 50 is disposed so as to avoid the lower leg L2 of the driver's leg forward in the side view of the vehicle even when the driver extends the leg and lands the foot L3. In this respect as well, the interference of the clutch actuator 50 with respect to the disposition space of the driver's leg is suppressed.

### <Release shaft>

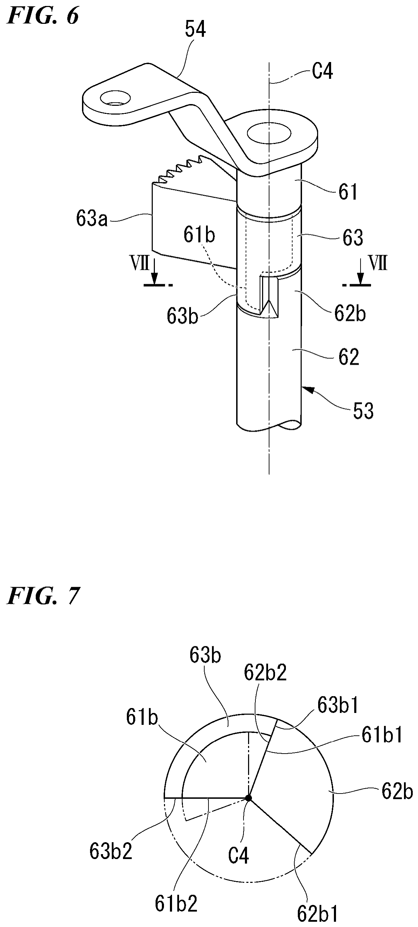

As shown in FIG. 5 and FIG. 6, the release shaft 53 is divided into a plurality of elements in order to be pivotable by individually receiving the input from the clutch actuator 50 and the input by the operation of the occupant.

The release shaft 53 includes an upper release shaft 61 that constitutes an upper portion, a lower release shaft 62 that constitutes a lower portion, and an intermediate release shaft 63. The intermediate release shaft 63 is disposed to bridge between the lower end portion of the upper release shaft 61 and the upper end portion of the lower release shaft 62.

The upper release shaft 61 is formed in a columnar shape. The upper release shaft 61 is rotatably supported by an upper boss portion 59b of the gear case 59. The upper release shaft 61 has an upper end portion protruding outward from the gear case 59. The driven clutch lever 54 is integrally rotatably supported by the upper end portion of the upper release shaft 61. A return spring (not shown) is attached to the driven clutch lever 54. This return spring applies a biasing force in a direction opposite to pivoting by the operation of the clutch lever 4b (pivoting in the clutch disconnecting direction) to the driven clutch lever 54.

The lower release shaft 62 is formed in a columnar shape. The lower release shaft 62 has a lower portion rotatably supported by an inner side of the right cover 17a. The lower portion of the lower release shaft 62 faces the inside of the gear case 59. The eccentric cam portion 38a of the release mechanism 38 is formed in the lower portion (see Fig. 2). A lower return spring (not shown) is attached to the lower end portion of the lower release shaft 62. This lower return spring applies a biasing force in a direction opposite to the pivoting in the clutch disconnecting direction to the lower release shaft 62.

Referring to Fig. 7, a manual operation-side cam 61b formed with a fan-shaped cross-section and extending in the axial direction is provided on a lower end portion of the upper release shaft 61.

A clutch-side cam 62b formed with a fan-shaped cross section and extending in the axial direction is provided on an upper end portion of the lower release shaft 62. The clutch-side cam 62b is provided within a range that avoids the manual operation-side cam 61b in the circumferential direction.

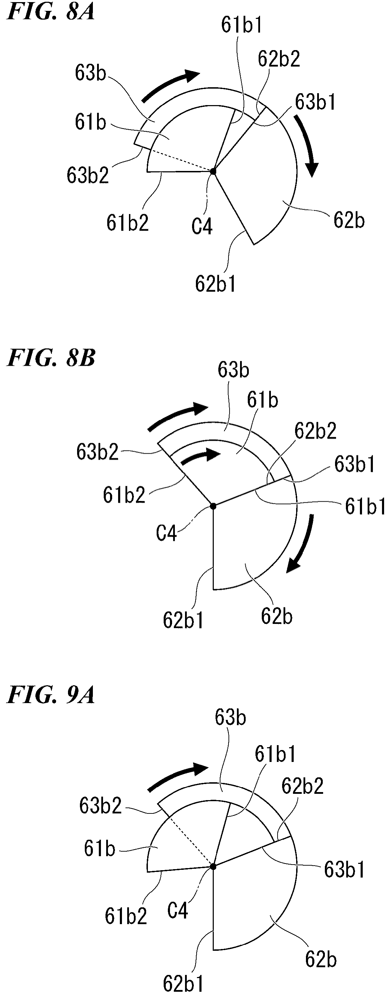

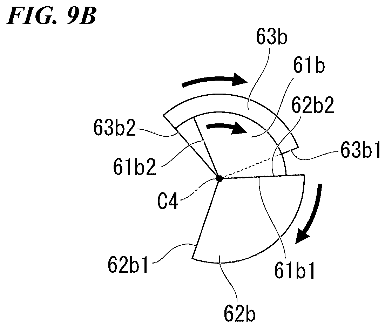

The lower end portion (the manual operation-side cam 61b) of the upper release shaft 61 and the upper end portion (the clutch-side cam 62b) of the lower release shaft 62 overlap each other in the axial direction while avoiding each other in the circumferential direction. Accordingly, it is possible to press one side surface 61b1 of the manual operation-side cam 61b in the circumferential direction against the other side surface 62b2 of the clutch-side cam 62b in the circumferential direction and rotate the lower release shaft 62 (see FIG. 8B and FIG. 9B).

The other side surface 61b2 of the manual operation-side cam 61b in the circumferential direction and one side surface 62b1 of the clutch-side cam 62b in the circumferential direction are separated from each other in the circumferential direction. Accordingly, when the clutch-side cam 62b has an input from the clutch actuator 50, the lower release shaft 62 can be rotated independently from the upper release shaft 61 (see FIG. 8A and FIG. 9A).

For example, the intermediate release shaft 63 is formed in a cylindrical shape. The intermediate release shaft 63 can be inserted through an engaging portion (upper and lower shaft engaging portions) between the lower end portion of the upper release shaft 61 and the upper end portion of the lower release shaft 62. The driven gear 63a is integrally rotatably supported by the intermediate release shaft 63.

A control operation-side cam 63b formed with a fan-shaped cross section and extending in the axial direction is provided on the intermediate release shaft 63.

The control operation-side cam 63b of the intermediate release shaft 63 and the clutch-side cam 62b of the lower release shaft 62 overlap each other in the axial direction while avoiding each other in the circumferential direction. Accordingly, it is possible to press one side surface 63b1 of the control operation-side cam 63b in the circumferential direction against the other side surface 62b2 of the clutch-side cam 62b in the circumferential direction and rotate the lower release shaft 62.

The control operation-side cam 63b is disposed to avoid the manual operation-side cam 61b of the upper release shaft 61 in the radial direction. Accordingly, when the input from the clutch actuator 50 is transmitted to the clutch-side cam 62b, the lower release shaft 62 can be rotated independently from the upper release shaft 61. In addition, when the manual operation is performed, the upper release shaft 61 can be rotated independently from the intermediate release shaft 63 on the control side.

The other side surface 63b2 of the control operation-side cam 63b in the circumferential direction and the one side surface 62b1 of the clutch-side cam 62b in the circumferential direction are separated from each other in the circumferential direction. Accordingly, when the clutch-side cam 62b has an input from a manual operation-side cam 63b, the lower release shaft 62 can be rotated independently from the intermediate release shaft 63.

Referring to FIG. 5, the clutch actuator 50 pivotably holds the upper release shaft 61 and the intermediate release shaft 63 with the gear case 59. The clutch actuator 50 includes the upper release shaft 61 and the intermediate release shaft 63. The lower release shaft 62 is rotatably held by the right cover 17a. The upper end of the lower release shaft 62 protrudes to the outside of the cover at the right cover 17a of the actuator mounting portion and is inserted into the gear case 59.

In such a configuration, when the clutch actuator 50 is attached to the right cover 17a, the linear release shaft 53 is configured together with the lower release shaft 62 located at the side closer to the right cover 17a. The release shaft 53 is configured by connecting the upper release shaft 61, the intermediate release shaft 63 and the lower release shaft 62 to each other.

The power unit PU of the embodiment can be configured as follows for a manual clutch type power unit that performs the connecting/disconnecting operation of the clutch device 26 by the operation of the driver without electric control. That is, the power unit PU can be configured by replacing the right cover 17a and the release shaft 53 and retrofitting the clutch actuator 50. For this reason, the clutch actuator 50 can also be attached to power units of different models. For this reason, a semi-automatic gear shift system (automatic clutch type gear shift system) can be easily configured by sharing the clutch actuator 50 among many models.

### <Two Motor Control>

Referring to FIG. 5, in the embodiment, two motors 521,522 in the clutch actuator 50 may cooperate to drive the release shaft 53 (to connect and disconnect the clutch device 26). In this case, the load shared by the two motors 521,522 is halved, so that the size of each motor 521,522 can be reduced. This increases the degree of freedom in the layout of the motor 52 as compared with the case where a single motor 52 is provided in a large size. Therefore, even when the clutch actuator 50 is disposed on the outer side of the power unit PU, the clutch actuator 50 is easily prevented from being extended outward in the vehicle width direction. Therefore, the clutch control device 40A can be substantially miniaturized.

In the embodiment, in the clutch actuator 50, one of the plurality (two) motors 52 may be used as a drive source of the release shaft 53 in a normal time (non-fail time), and the remaining one may be used for another purpose. For example, the action of the remaining motor 52 may be saved for fail-safe purposes or may be used as a current sensor.

### <Specific Example of Transition of Clutch Control Mode>

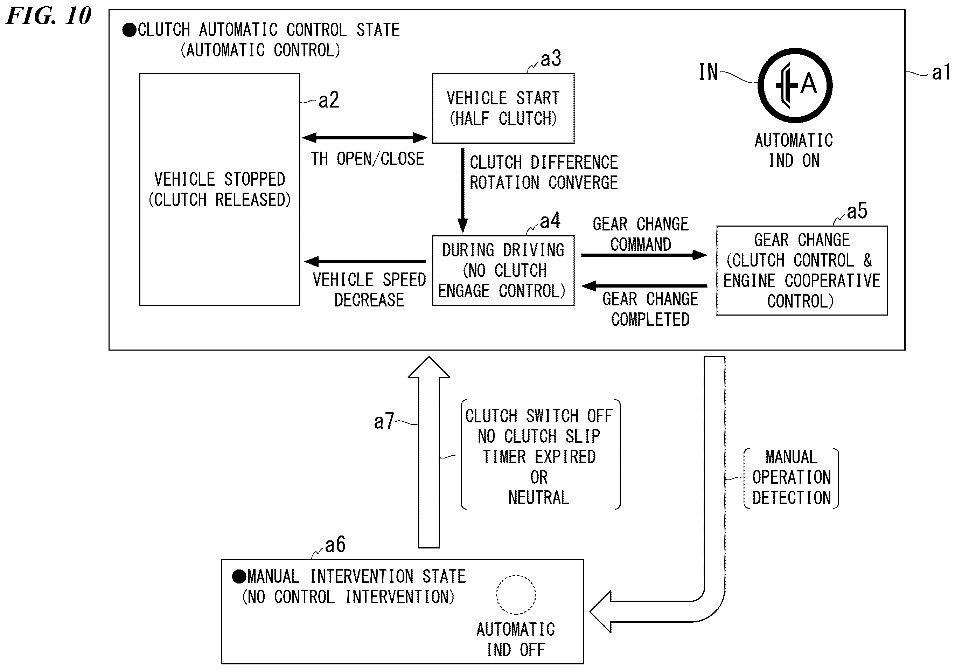

Referring to FIG. 10, a specific example of the transition of the clutch control mode will be described.

FIG. 10 shows the basic control state of the clutch control device 40A after the system is started. For example, when the ignition is turned on (main switch is turned on, system operating) from the time when the gearbox 21 is in the neutral state, the clutch control device 40A is in the clutch automatic control state (automatic mode M1) (see a1 in the figure). At this time, the clutch actuator 50 is driven to release (disconnect) the clutch device 26 (see a2 in the figure). When the gearbox 21 is shifted into the in-gear state and the throttle is opened from this state, the starting control of the motorcycle 1 including the half clutch control is performed (see a3 in the figure).

At this time, the clutch control device 40A increases the vehicle speed while operating the clutch device 26 to the engagement side (connection side) so that the rotation difference (clutch difference rotation) between the upstream side and the downstream side of the clutch device 26 converges to zero while the clutch switch 4c is kept off (no operation of the clutch lever 4b). The control in which the clutch device 26 is controlled to be released (disconnected) when the motorcycle 1 is stopped is performed regardless of whether the gearbox 21 is in the neutral or in gear state.

When the automatic clutch control (automatic mode M1) is executed, the indicator IN in the meter device of the motorcycle 1 is turned on to notify the driver that the automatic clutch control is being executed. During the travel in the clutch engaged state (clutch differential rotation 0), the clutch automatic control is interrupted and the drive of the clutch actuator 50 is stopped (see a4 in the figure). When the clutch control device 40A is in the automatic clutch control (automatic mode M1), the indicator IN is turned on regardless of whether the clutch actuator 50 is driven, so that the driver can recognize that the clutch control device 40A is in the automatic clutch control (automatic mode M1).

In the clutch automatic control, the gear change of the gearbox 21 can be performed only by the driver operating the shift operator (see a5 in the figure). At this time, the clutch control and the engine cooperative control are executed with the shift operation as the gear change command. After the gear change is completed, the automatic clutch control is returned to the interrupted state.

When the operation of the clutch lever 4b (manual operation) is detected from the clutch automatic control state, the clutch automatic control state is shifted to the manual control intervention state (manual intervention mode M3) (see a6 in the figure). In the manual intervention control, the driver can manually operate the clutch device 26. In the manual intervention control, after a state in which a predetermined return condition is satisfied is continued for a predetermined return time T, the clutch is automatically returned to the automatic clutch control (automatic mode return control, see a7 in the figure). In the manual mode M2, the clutch control is not intervened and the indicator IN is also turned off.

In the manual intervention control, when the possibility of engine stall is detected, the clutch automatic control is immediately returned without waiting for the return time T to elapse. When the gearbox 21 is in the in-gear state in the manual intervention control, the manual intervention control is returned to the clutch automatic control from the manual intervention control even the gearbox 21 is going to be brought into the neutral position. The state in which the return condition is satisfied is, for example, a state in which the clutch switch 4c is turned off (no operation of the clutch lever 4b) and the clutch device 26 is connected so that the slip (differential rotation of the clutch) is eliminated. After this state is reached, the time keeping of the state in which the above mentioned return condition is being satisfied is started, and it is determined whether or not the duration has reached the threshold of the return time T.

Here, the possibility of engine stall is considered to be detected from the vehicle speed or the rate of decrease in the engine rotation speed. However, if the possibility of engine stall is determined only by the rate of decrease in the vehicle speed or the engine rotation speed, there is a possibility that the possibility of engine stall is determined at the time of starting the vehicle, and in this case, there is a possibility that a return to the clutch automatic control is executed which is not intended by the driver. Therefore, the detection of the possibility of engine stall may be started after the vehicle speed reaches a predetermined vehicle speed threshold (for example, 10 km / h) at which it can be determined that the start is completed.

For example, when the motorcycle 1 is stopped in the in-gear state, and the system is started by turning on the ignition from this stopped state, the clutch control device 40A enters the manual control intervention state in the engine stop in-gear state . In this state, for example, the system is assumed to be started from the in-gear stop state on the uphill and downhill, and therefore, the connected state of the clutch device 26 is continued. In this state, the engine is started by gripping the clutch lever 4b as in the case of the conventional motorcycle. After the engine is started, the same manual control intervention state as described above is entered (see a6 in the figure).

The clutch control device 40A is brought into the same clutch automatic control state as described above by the gearbox 21 being operated to the neutral position from the manual control intervention state in the engine stop in-gear state (see a1 in the figure). Thereafter, the clutch actuator 50 is driven to release (disconnect) the clutch device 26 (see a2 in the figure) and the gearbox 21 is shifted into the in-gear from this state, and by the throttle being opened, the starting control of the motorcycle 1 including the half clutch control is performed (see a3 in the figure).

When the mode is changed to the manual mode M2 (system disable mode, mode in which clutch control is not performed) by the mode changeover switch 49, the automatic mode return control is not performed, and thereby, even when executing a drive different from a normal driving (for example, racing driving on a circuit or the like), the clutch device 26 is not disengaged near the idle rotation speed or does not hinder a start with high rotation speed.

### <Processing after Manual Intervention>

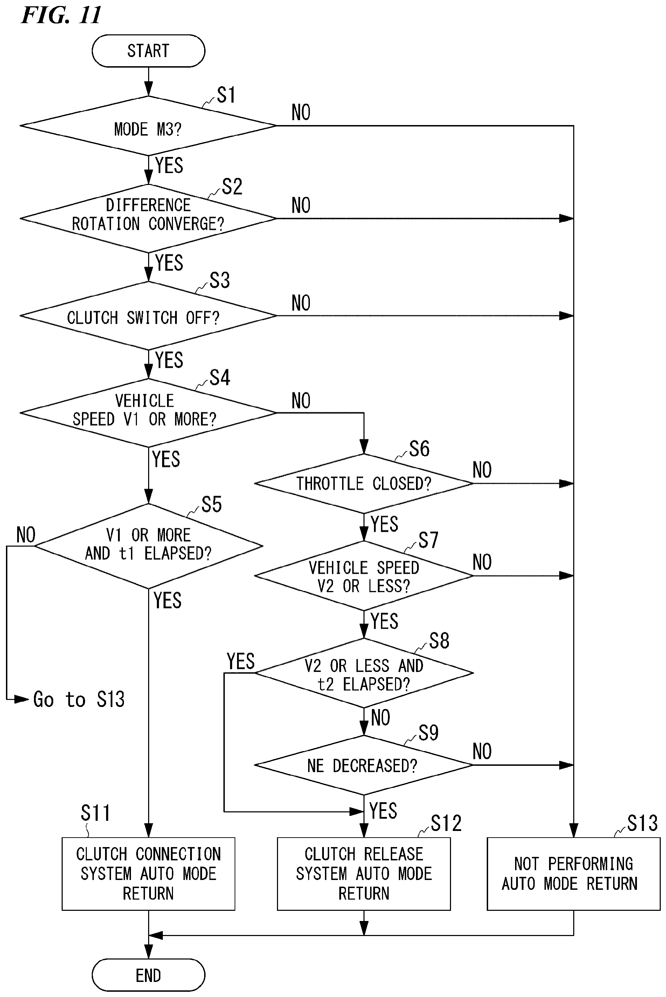

Next, the processing performed by the control unit 40 when the automatic mode return control is performed after the manual intervention will be described with reference to the flowchart of FIG. 11.

First, in step S1, it is determined whether the clutch control mode is the manual intervention mode M3. If YES (i.e., the manual intervention mode M3) in step S1, the process proceeds to step S2. If NO (not the manual intervention mode M3) is determined in step S1 (for example, if the mode changeover switch 49 is operated to the manual mode M2), the automatic mode return control is not performed (step S13), and the process is temporarily ended.

In step S2, it is determined whether the differential clutch rotation has converged (whether the differential clutch rotation is less than the differential rotation threshold Ne1). This determination corresponds to a determination as to whether or not there is no differential clutch rotation (clutch engaged state). If YES (the differential clutch rotation has converged) in step S2, the process proceeds to step S3. If NO (the differential clutch rotation has not converged) in step S2, the automatic mode return control is not performed (step S13), and the process is temporarily terminated. The case where the differential clutch rotation is not converged corresponds to a state where the clutch device 26 slips due to a half clutch or the like.

In step S3, it is determined whether the clutch switch 4c is OFF (whether the clutch lever 4b is not operated). If YES (no operation of the clutch lever 4b) in step S3, the process proceeds to step S4. If NO (the clutch lever 4b is operated) in step S3, the automatic mode return control is not performed (step S13), and the process is temporarily ended.

In step S4, it is determined whether the vehicle speed is equal to or higher than a first threshold V1. The threshold V1 of the vehicle speed in step S4 is a value which becomes a boundary between the low vehicle speed region and the medium vehicle speed region, and corresponds to, for example, 1600 rpm in engine rotation speed. In step S4, the differential clutch rotation is converged and the clutch lever 4b is not operated, and therefore, the vehicle speed is proportional to the engine rotation speed. Therefore, although the gear information of the gearbox 21 is also required, the step S4 can be replaced with a determination as to whether or not the engine rotation speed is equal to or higher than the threshold. If YES (vehicle speed is equal to or higher than the first threshold V1) in step S4, the process proceeds to step S5. If NO (vehicle speed is less than the first threshold V1) in step S4, the process proceeds to step S6.

In step S5, it is determined whether the return time T has passed the first return time t1. The first return time t1 in a case the vehicle speed is equal to or higher than the first threshold V1 is set to, for example, 1 second. In the medium vehicle speed region (for example, 1600 rpm or more), the possibility that the driver operates the clutch device 26 is lower than that in the low vehicle speed region (for example, less than 1600 rpm). Therefore, even if it is returned to the automatic mode M1 in a short time, the possibility of giving the driver a sense of discomfort is low. If YES (the first return time t1 has elapsed) in step S5, the process proceeds to step S11, and the clutch connection system automatic mode return control is performed. If the answer to the question of step S5 is NO (the first return time t1 has not elapsed), the automatic mode return control is not performed (step S13), and the process is temporarily terminated.

The "clutch connection system automatic mode return control" means returning to the automatic mode M1 while the clutch device 26 is connected (without performing the disconnection / connection operation of the clutch device 26).

In step S6, it is determined whether the throttle is in a closed state (whether the driver has no intention to drive). In the low vehicle speed region (for example, less than 1600 rpm), the possibility that the driver continuously operates the clutch device 26 is higher than in the medium vehicle speed region (for example, 1600 rpm or more). Therefore, if the engine returns to the automatic mode M1 without any condition, the clutch operation of the driver may be affected to give a feeling of discomfort. If YES (there is no intention to drive) in step S6, the process proceeds to step S7. If NO (there is intention to drive) in step S6, the automatic mode return control is not performed (step S13), and the process is temporarily terminated.

In step S7, it is determined whether the vehicle speed is equal to or lower than the second threshold V2. The threshold V2 of the vehicle speed in step S7 is a value which serves as a boundary between the low vehicle speed region and the extremely low vehicle speed region, is lower than the first threshold V1, and corresponds to, for example, the idle rotation speed (for example, 1200 rpm) of the engine 13. In step S7, the differential clutch rotation is converged and the clutch lever 4b is not operated, and therefore, the vehicle speed is proportional to the engine rotation speed. Therefore, although the gear information of the gearbox 21 is also required, the step S7 can be replaced with the determination of whether or not the engine rotation speed is equal to or less than the threshold. In the low vehicle speed region and the extremely low vehicle speed region, the possibility of operating the clutch device 26 is higher than that in the medium vehicle speed region, but in the extremely low vehicle speed region, it is necessary to consider the possibility of engine stall. Therefore, if YES (the vehicle speed is equal to or lower than the second threshold V2) in step S7, it is determined that the vehicle speed is in the extremely low vehicle speed region, and the process proceeds to step S8. If NO (the vehicle speed exceeds the second threshold V2) in step S7, it is considered that the possibility in which the engine stall immediately occurs is low, and the automatic mode return control is not performed (step S13), and the process is temporarily ended.

In step S8, it is determined whether or not a second return time t2, in which the return time T is longer than the first return time t1, has elapsed. If YES (the second return time t2 has elapsed) in step S8, it is determined that the driver has no intention of operating the clutch device 26 even in the extremely low vehicle speed region, and the process proceeds to step S12 to perform the clutch release system automatic mode return control for avoiding engine stall. If NO (the second return time t2 has not elapsed) in step S8, the process proceeds to step S9, and the state of decrease in the engine rotation speed is determined.

The "clutch release system automatic mode return control" refers to a control for releasing (disconnecting) the clutch device 26 simultaneously with the automatic mode return.

In step S9, it is determined whether the engine rotation speed is less than the engine stall threshold (engine rotation speed immediately before engine stall) Ne2 as the engine rotation speed decrease state. That is, when the engine rotation speed decreases and falls below the engine stall threshold Ne2 while waiting for the second return time t2 to elapse, the engine rotation speed immediately returns to the automatic mode M1 without waiting for the second return time t2 to elapse, and the clutch device 26 is disengaged regardless of the operation of the driver to avoid the engine stall. If YES (less than the engine stall threshold Ne2) in step S9, the process proceeds to step S12, and the clutch release system automatic mode return control is performed. If NO (equal to or greater than the engine stall threshold Ne2) in step S9, the automatic mode return control is not performed (step S13), and the process is temporarily ended.

In step S9, the determination is not limited to the determination of whether the value of the engine rotation speed (or the vehicle speed) is less than the threshold, and may include the determination of whether the gradient (the rate of decrease) of the decrease of the engine rotation speed (or the vehicle speed) per hour is equal to or greater than the threshold Ne3.

As described above, the clutch control device 40A is provided with a clutch device 26 that is configured to disconnect and connect power transmission between an engine 13 and a gearbox 21 of a motorcycle 1, a clutch actuator 50 that is configured to operate the clutch device 26, a clutch operating element 4b that is configured to operate the clutch device 26 separately from the clutch actuator 50, and a control unit 40 that is configured to control the drive of the clutch actuator 50, wherein the control unit 40 is a clutch control device 40A which has an automatic control mode M1 for automatically operating the clutch device 26 by driving the clutch actuator 50 and a manual control mode M2 for manually operating the clutch device 26 by operation input to the clutch operating element 4b, the control unit 40 has a manual control intervention mode M3 to be shifted when operation to the clutch operating element 4b is detected during the automatic control mode M1, and the control unit 40 performs an automatic mode return control that returns to the automatic control mode M1 when a state in which a predetermined return condition is satisfied continues for a prescribed return time T during the manual control intervention mode M3.

According to this configuration, when the state satisfying the specified return condition continues for the specified return time T during the manual control intervention mode M3, the automatic return to the automatic control mode M1 is performed, whereby it is possible to prevent the driver from misidentifying the control mode and performing the shift operation (particularly, performing the in-gear operation without the clutch operation in spite of the manual control intervention mode M3).

The clutch control device 40A varies the return time T according to at least one of the vehicle speed of the motorcycle 1 and the rotational speed of the engine 13 (engine rotational speed).

According to this configuration, by varying the time for returning to the automatic control mode M1 according to at least one of the vehicle speed and the engine rotation speed of the motorcycle, mode switching can be performed in consideration of the operability of the driver after the manual control intervention mode M3, and the clutch control mode can be appropriately returned to the automatic control mode M1 while suppressing the discomfort of the driver.

That is, in the medium vehicle speed region (for example, 1600 rpm or more) of the vehicle, the possibility that the driver operates the clutch device 26 is low, and even if the clutch device 26 is operated in the automatic control mode M1, the possibility that the driver feels discomfort is low. Therefore, the automatic control mode M1 is returned early by setting the return time T to about one second.

On the other hand, in a low vehicle speed region (from the idle rotation speed to less than 1600 rpm) of the vehicle, the driver is likely to continuously operate the clutch device 26, and if the clutch device 26 operates in the automatic control mode M1, the driver may feel uncomfortable. Therefore, the return time T is extended to about 5 seconds, which is longer than that in the medium vehicle speed region, and the return to the automatic control mode M1 is delayed.

The count of the return time T in the low vehicle speed region is started after the throttle is turned off (after the driver loses the intention to drive). This is because the driver assumes that the clutch device 26 is connected by manual operation when the throttle opening is continued (when the driver has the intention of driving).

If the engine rotation speed decreases to below the threshold while waiting for the return time T in the OFF state (clutch connected state) of the clutch switch 4c, the engine rotation speed is immediately returned to the automatic control mode M1 without waiting for the return time T, and the clutch device 26 is disconnected regardless of the operation of the driver to avoid engine stall.

When at least one of the vehicle speed and the engine rotation speed is less than a first threshold V1, a clutch control device 40A sets the recovery time T longer than a case in which the at least one of the value of the vehicle speed and the rotational speed is equal to or greater than the first threshold V1.

According to this configuration, when at least one of the vehicle speed and the engine rotation speed is in the low vehicle speed region, the return time T is extended to delay the return to the automatic control mode M1, and thus it is possible to suppress the occurrence of a sense of discomfort due to the clutch control different from the driver's intention. This is because the driver is likely to operate the clutch device 26 continuously in the low vehicle speed region, and if the clutch device 26 is automatically operated, the driver may feel uncomfortable.

In the clutch control device 40A, the clutch device 26 is a normally closed clutch which transmits rotational power, and starts counting the return time T in a case in which the differential clutch rotation generated between the upstream side and the downstream side of the clutch device 26 is less than a prescribed differential rotation threshold Ne1.

According to this configuration, when the differential clutch rotation is less than the threshold Ne1 (when the clutch device 26 is in the locked state), the return time T is counted, and thus the return to the automatic control mode M1 can be achieved in a state where the possibility that the driver operates the clutch device 26 is low and the influence on the vehicle body behavior is small.

When the clutch control device 40A detects the possibility of engine stall during the counting of the return time T, the clutch control device 40A immediately returns to the automatic control mode M1 without waiting for the return time T to elapse.

According to this configuration, when it is determined that there is a possibility of engine stall in this state because at least one of the vehicle speed and the engine rotation speed is decreasing and the like, by performing a control of immediately returning to the automatic control mode M1 and disconnecting the clutch device 26 and the like, it is possible to avoid the engine stall.

The clutch control device 40A detects the possibility of engine stall in a case in which at least one of the vehicle speed and the engine rotation speed becomes equal to or less than an engine stall threshold Ne2, or when the rate of decrease in at least one of the vehicle speed and the engine rotation speed becomes equal to or greater than a prescribed rate of decrease threshold Ne3.

According to this configuration, the possibility of engine stall can be easily detected by detecting the values or the rate of decrease of the vehicle speed and the engine rotation speed, and the clutch control mode can be appropriately returned to the automatic control mode M1.

The clutch control device 40A detects the possibility of engine stall in a case in which the vehicle speed is less than an idle vehicle speed V2 and at least one of the vehicle speed and the engine rotation speed is decreased.

According to this configuration, by further detecting a decrease in at least one of the vehicle speed and the engine rotation speed below the idle vehicle speed V2, it is possible to detect the possibility of engine stall and to appropriately return the clutch control mode to the automatic control mode M1.

The present invention is not limited to the above embodiment, and for example, the clutch operating element is not limited to the clutch lever 4b, and may be a clutch pedal or other various operating elements. The clutch device 26 may be a normally open clutch which is in a disconnected state in a normal state in which there is no input from the outside. The clutch device 26 is not limited to the clutch device arranged between the engine 13 and the gearbox 21, and may be arranged between the prime mover and any output object other than the gearbox. The prime mover is not limited to the internal combustion engine, and may be an electric motor.

The present invention is not limited to the application to a saddle-riding type vehicle in which the clutch operation is automated as in the above embodiment. For example, the present invention can be applied to a saddle-ride type vehicle (a saddle-ride type vehicle having a gearbox device without a clutch operation) which basically performs a manual clutch operation but does not perform the manual clutch operation under a predetermined condition and can shift the speed by adjusting the driving force.

The clutch control device 40A of the present embodiment may be applied to a saddle-ride type vehicle other than a motorcycle.

The saddle-ride type vehicle includes all vehicles in which a driver rides a vehicle while stepping over the vehicle body, and includes not only motorcycles (including motorized bicycles and scooter type vehicles) but also three wheeled vehicles (including front and rear two wheeled vehicles as well as front and rear two wheeled vehicles) or four wheeled vehicles (such as four wheeled buggies).

The invention may be applied to a vehicle including an electric motor as a prime mover.

The invention may be applied to vehicles other than saddle-ride type vehicles (passenger cars, buses, trucks, etc.).

Although the clutch control device 40A of the present embodiment is applied to a vehicle, the present invention is not limited to the application to a vehicle, and may be applied to various transportation equipment such as an aircraft and a ship, and various vehicles and moving bodies such as construction machines and industrial machines. Furthermore, the present invention is widely applicable to a hand-pushed lawn mower, a cleaning machine, and the like, as long as the clutch control device is provided in an apparatus other than a vehicle.

The configuration of the above embodiment is an example of the present invention, and various changes can be made without departing from the scope of the present invention, such as replacing the components of the embodiment with well-known components.

### REFERENCE SIGNS LIST

1 Motorcycle (vehicle)
4b Clutch lever (clutch operating element)
13 Engine (internal combustion engines, prime mover)
21 Gearbox (output object)
26 Clutch device
40 Control unit
40A Clutch control device
50 Clutch actuator
M1 Auto Control Mode, Automatic mode
M2 Manual Control Mode, Manual Mode
M3 Manual Control Intervention Mode, Manual Intervention Mode
T Return time
t1: First return time
t2: Second return time
V1: First threshold
V2: Second threshold
Ne1: Differential rotation threshold
Ne2: Engine stall threshold
Ne3 Decrease threshold

## Claims

1. A clutch control device, comprising;
a clutch device (26) that is configured to disconnect and connect power transmission between a prime mover (13) and an output object (21) of a vehicle (1);
a clutch actuator (50) that is configured to operate the clutch device (26);
a clutch operating element (4b) that is configured to operate the clutch device (26) separately from the clutch actuator (50); and
a control unit (40) that is configured to control a drive of the clutch actuator (50);
wherein the control unit (40) is a clutch control device (40A) which has:
an automatic control mode (M1) for automatically operating the clutch device (26) by a driving of the clutch actuator (50); and
a manual control mode (M2) for manually operating the clutch device (26) by an operation input to the clutch operation element (4b),
wherein the control unit (40) has:
a manual control intervention mode (M3) to be shifted when an operation to the clutch operating element (4b) is detected during the automatic control mode (M1); and
the control unit (40) performs an automatic mode return control that returns to the automatic control mode (M1) when a state in which a predetermined return condition is satisfied continues for a predetermined return time (T) during the manual control intervention mode (M3).

2. The clutch control device according to claim 1, wherein the return time (T) is varied according to at least one of a vehicle speed of the vehicle (1) and a rotational speed of the prime mover (13).

3. The clutch control device according to claim 2, wherein, when at least one of a value of the vehicle speed and the rotational speed is less than a first threshold (V1), the recovery time (T) is set longer than a case in which the at least one of the value of the vehicle speed and the rotational speed is equal to or greater than the first threshold (V1).

4. The clutch control device according to claim 3, wherein the clutch device (26) is a normally closed clutch for transmitting rotational power, and
wherein a count of the return time (T) is started in a case in which a differential clutch rotation generated between an upstream side and a downstream side of the clutch device (26) is less than a predetermined differential rotation threshold (Ne1).

5. The clutch control device according to claim 4, wherein, in a case in which a possibility of a stop of the prime mover (13) is detected during counting the return time (T), the clutch control device returns to the automatic control mode (M1) immediately without waiting for the return time (T) to elapse.

6. The clutch control device according to claim 5, wherein the possibility of the stop of the prime mover (13) is detected in a case in which at least one of the vehicle speed and the rotational speed becomes equal to or less than a predetermined threshold (Ne2) or in a case in which a rate of decrease in at least one of the vehicle speed and the rotational speed becomes equal to or more than a predetermined threshold (Ne3).

7. The clutch control device according to claim 5, wherein the possibility of the stop of the prime mover (13) is detected in a case in which the vehicle speed is less than an idle vehicle speed and at least one of the vehicle speed and the rotational speed is decreased.

## Amended claims

### Amended claims under Art. 19.1 PCT

1. (Amended) A clutch control device, comprising;
a clutch device (26) that is configured to disconnect and connect power transmission between a prime mover (13) and an output object (21) of a vehicle (1);
a clutch actuator (50) that is configured to operate the clutch device (26);
a clutch operating element (4b) that is configured to operate the clutch device (26) separately from the clutch actuator (50); and
a control unit (40) that is configured to control a drive of the clutch actuator (50);
wherein the control unit (40) is a clutch control device (40A) which has:
an automatic control mode (M1) for automatically operating the clutch device (26) by a driving of the clutch actuator (50); and
a manual control mode (M2) for manually operating the clutch device (26) by an operation input to the clutch operation element (4b),
wherein the control unit (40) has:
a manual control intervention mode (M3) to be shifted when an operation to the clutch operating element (4b) is detected during the automatic control mode (M1);
the control unit (40) performs an automatic mode return control that returns to the automatic control mode (M1) when a state in which a predetermined return condition is satisfied continues for a predetermined return time (T) during the manual control intervention mode (M3), and
wherein the return time (T) is varied according to at least one of a vehicle speed of the vehicle (1) and a rotational speed of the prime mover (13).

2. (Deleted)

3. (Amended) The clutch control device according to claim 1, wherein, when at least one of a value of the vehicle speed and the rotational speed is less than a first threshold (V1), the recovery time (T) is set longer than a case in which the at least one of the value of the vehicle speed and the rotational speed is equal to or greater than the first threshold (V1).

4. The clutch control device according to claim 3, wherein the clutch device (26) is a normally closed clutch for transmitting rotational power, and
wherein a count of the return time (T) is started in a case in which a differential clutch rotation generated between an upstream side and a downstream side of the clutch device (26) is less than a predetermined differential rotation threshold (Ne1).

5. The clutch control device according to claim 4, wherein, in a case in which a possibility of a stop of the prime mover (13) is detected during counting the return time (T), the clutch control device returns to the automatic control mode (M1) immediately without waiting for the return time (T) to elapse.

6. The clutch control device according to claim 5, wherein the possibility of the stop of the prime mover (13) is detected in a case in which at least one of the vehicle speed and the rotational speed becomes equal to or less than a predetermined threshold (Ne2) or in a case in which a rate of decrease in at least one of the vehicle speed and the rotational speed becomes equal to or more than a predetermined threshold (Ne3).

7. The clutch control device according to claim 5, wherein the possibility of the stop of the prime mover (13) is detected in a case in which the vehicle speed is less than an idle vehicle speed and at least one of the vehicle speed and the rotational speed is decreased.

Statement under Art. 19.1 PCT
Amendment of claim 1 is based on originally filed claim 2.

Claim 2 is deleted.

Amendment of claim 3 is for changing dependency in accordance with the deletion of claim 2.
